(19) Europäisches Patentamt
European Patent Office
Office européen des brevets

(11) **EP 1 988 412 A2**

(12) **EUROPEAN PATENT APPLICATION**

(43) Date of publication:
**05.11.2008 Bulletin 2008/45**

(51) Int Cl.:
***G02B 6/036*** (2006.01)

(21) Application number: **08003036.4**

(22) Date of filing: **19.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.04.2007 US 796892**

(71) Applicant: **Furukawa Electric North America Inc. (a Delaware Corporation) Norcross GA 30071 (US)**

(72) Inventors:
• **Digiovanni, David J.**
  **Mountain Lakes**
  **New Jersey 07046 (US)**
• **Headley, Clifford**
  **Flemington**
  **New Jersey 08822 (US)**
• **Yablon, Andrew D.**
  **Livingston**
  **New Jersey 07039 (US)**

(74) Representative: **Schoppe, Fritz et al**
  **Schoppe, Zimmermann, Stöckeler & Zinkler**
  **Patentanwälte**
  **Postfach 246**
  **82043 Pullach bei München (DE)**

(54) **Mode-field resizing in optical fibers**

(57) An all-fiber mode-field resizer comprises a first optical fiber configured to propagate signal light in a predetermined transverse mode along a longitudinal axis from a first input/output (I/O) port to a second I/O port. The first fiber is configured to have a first effective mode-field area and a first core V-parameter proximate the first I/O port and to have a second effective mode-field area and a second core V-parameter proximate the second I/O port. The second mode-field area is greater than the first mode-field area, and the second V-parameter is less than the first V-parameter. In one embodiment, the second V-parameter is less than approximately 1.3, and preferably less than 1.0. In another embodiment, the first V-parameter is greater than approximately 1.8. In yet another embodiment, our mode-field resizer is incorporated into a tapered fiber bundle.

FIG. 10

**Description**

**BACKGROUND OF THE INVENTION**

Field of the Invention

This invention relates to mode-field resizing in optical fibers, and, more particularly, to high power apparatus that requires matching the mode-field sizes of different fibers to one another.

Discussion of the Related Art

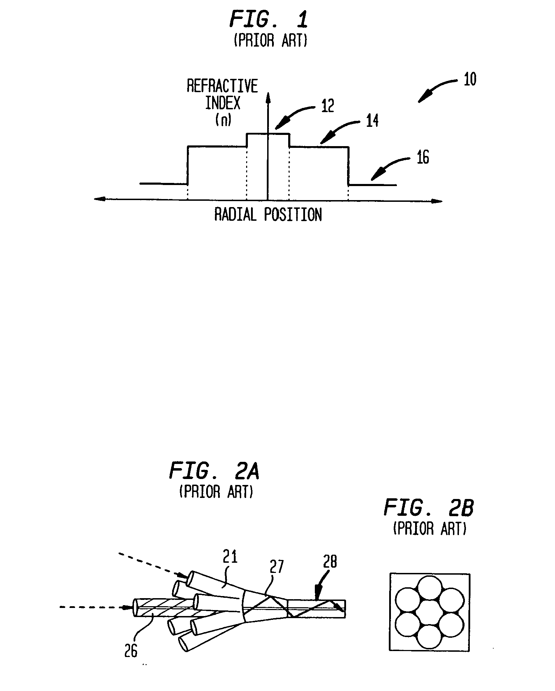

High power optical fiber lasers and amplifiers have received significant attention recently. These devices generally use double-clad fibers (DCFs), which have a refractive index profile exemplified in FIG. 1. DCFs include a core region 12 which may be doped with a gain-producing species (e.g., a rare-earth element), an inner cladding 14 for confining the signal light to the core region, and an outer cladding 16, which may be a low-index polymer or a low-index glass. The inner cladding 14 also acts as a core for multimode pump light, which is confined by the outer cladding 16. When pump light is launched into the inner cladding 14, it can be absorbed in the core region 12, where the signal light may be amplified. In this way, large amounts of pump power with a high NA can be converted to light with lower NA confined in the much smaller core region 12. In many applications, core region 12 guides only the fundamental mode. Alternatively, core region 12 may be intrinsically multimoded, but the signal light may be carefully launched to preferentially excite only the fundamental mode.

The advantages of DCF lasers compared to solid state lasers include stable optical characteristics (i. e., stable transverse modal properties due to the mode being guided in the fiber), easy thermal management (i.e., due to the large surface-area-to-volume ratio of the fiber), and attractive physical properties (e.g., lightweight and rugged). Two main applications are high power CW operation, reaching the kilowatt range, and pulsed applications, reaching milliJoule pulses with peak powers exceeding 100 kW. In these applications, there are several problems including (i) coupling the required pump power into the fiber; (ii) preventing the growth of nonlinear effects in the signal, and (iii) extracting sufficient energy and power from the gain region.

One all-fiber solution that is commonly used to couple light into a gain-producing fiber (GPF) is a tapered fiber bundle (TFB). A schematic of a TFB 20 is shown in FIG. 2A. In this approach, several fibers 21, 26 are held closely together. These fibers typically have a pure silica core surrounded by a lower index cladding. The bundled fibers are slowly melted together, and the assembly is tapered down in section 27 by stretching to match the diameter of an output pigtail fiber 28, which is fusion spliced to the GPF (not shown). For use in an amplifier or to counter-pump a fiber laser, the TFB 20 must also transmit signal light in addition to pump light. Accordingly, a signal-guiding core is included in the central fiber 26. A micrograph of the cleaved end of section 27 of such a TFB comprising six pump-guiding fibers 21 and a central signal-guiding fiber 26 is shown in FIG. 2B. Commercially available TFBs illustratively have a pump throughput > 95% and a signal throughput of > 90%.

To prevent detrimental nonlinear effects from occurring in the signal light at high powers, fibers with large mode area (LMA) have been used. Since the threshold level for nonlinear effects is proportional to the effective area of the intensity profile of the fiber and inversely proportional to fiber length, use of LMA fibers increases the threshold for many deleterious nonlinear effects. Examples of such effects include stimulated Raman scattering, stimulated Brillouin scattering, and self-phase modulation. A further increase in nonlinear threshold is obtained since the LMA fiber reduces the required fiber length. In addition, the larger core area of a LMA fiber allows a larger number of dopant ions to be incorporated into the fiber and allows greater energy storage and extraction by the signal.

On the other hand, LMA fibers allow the propagation of signal light in multiple transverse modes, which creates competition for gain among any modes that overlap the gain region of the core. Signal light can reside in unwanted higher order modes due to imperfect coupling of the signal when it is launched into the gain fiber, due to spontaneous emission captured by the higher order mode, or due to mode coupling along the fiber length. As the effective area ($A_{eff}$) of a mode increases, it is increasingly likely that inadvertent mode coupling will occur due to unavoidable perturbations to the fiber. Signal light coupled into a higher order mode will be amplified, resulting in degraded beam quality of the amplifier output.

In the context of high power fiber amplifiers, which typically require multiple gain stages to amplify the signal to the desired final power level, the use of LMA fibers is also problematic. These amplifiers also include several types of inter-stage components typically used, for example, to control the direction of light, filter unwanted spectral components, or control the modulation speed of a pulsed signal. In the first stages of such an amplifier, it is preferable to use conventional single mode fibers (SMFs) since the signal power is low and the increased intensity increases the energy extraction efficiency. However, as the signal power increases through the amplifier chain, at some point it becomes desirable to convert to LMA fibers. Such LMA fibers may have cores larger than 15 $\mu$m and in some cases larger than 45 $\mu$m. Having

fibers with different core sizes in the same amplification chain presents the very practical problem of coupling light from a smaller modefield area/diameter (e.g., a SMF or relatively small LMA fiber) to larger modefield area/diameter (e.g., a larger LMA fiber), or conversely. It is important to effect this coupling in a way that minimizes both total signal power loss and excitation of unwanted higher order modes of the LMA fiber. Light that is coupled into higher order modes may have several deleterious effects on the quality of the output beam.

Current TFBs are designed with essentially equivalent mode-field diameter (MFD) or effective area ($A_{eff}$) at the input and the output. [See, for example, D. J. DiGiovanni et al., US Patent No. 5,864,644 (1999), hereinafter *DiGiovanni '644*.] One proposed solution for resizing the mode field in the amplifier architecture includes placing a discrete mode resizer after the tapered section of the TFB. [See, D. J. DiGiovanni et al., US Patent No. 6,970,624 (2005).] However, this resizer adds an additional splice, which can lead to increased signal or pump loss, signal reflection, coupling to higher order modes, and reduced manufacturing yield. Both of these patents are incorporated herein by reference.

Accordingly, there remains a need in the art for a mode-field resizer that addresses one or more of the deficiencies of the prior art. In particular, there is a need for an all-fiber TFB that includes a mode-field resizer capable of significantly changing the MFD or $A_{eff}$ of the signal light. (Hereinafter, the phrase "MFD or $A_{eff}$" will be written "MFD/$A_{eff}$.")

## BRIEF SUMMARY OF THE INVENTION

In accordance with one aspect of our invention, optical apparatus (e.g., an all-fiber mode-field resizer) comprises a first optical fiber configured to propagate signal light in a predetermined transverse mode along a longitudinal axis from a first input/output (I/O) port to a second I/O port. The first fiber is configured to have a first $A_{eff}$ and a first core V-parameter proximate the first I/O port and to have a second $A_{eff}$ and a second core V-parameter proximate the second I/O port. The second $A_{eff}$ is greater than the first $A_{eff}$, and the second V-parameter is less than the first V-parameter.

As discussed more fully hereinafter, the V-parameter of an optical fiber is directly proportional to the core diameter and the numerical aperture (NA) and is inversely proportional to wavelength.

In one embodiment, the second V-parameter is less than approximately 1.3, and preferably less than 1.0.

In another embodiment, the first V-parameter is greater than approximately 1.8.

In yet another embodiment, our mode-field resizer is incorporated into a TFB. More specifically, a multiplicity of tapered, bundled fibers is configured to propagate pump light, the multiplicity being bundled around the first fiber and configured to couple pump light into a second fiber having a gain-producing section. The first fiber is configured to propagate signal light to be amplified by the gain section.

## BRIEF DESCRIPTION OF THE SEVERAL VIEWS OF THE DRAWING

Our invention, together with its various features and advantages, can be readily understood from the following more detailed description taken in conjunction with the accompanying drawing, in which:

FIG. 1 is a schematic, refractive index profile of a prior art DCF;
FIG. 2 is a schematic, three-dimensional view of a prior art TFB;
FIG. 3 is a schematic, block diagrammatic view of an optical apparatus, including a mode resizer, in accordance with one embodiment of our invention;
FIG. 4 is a schematic cross-sectional view of a mode resizer in accordance with one embodiment of our invention;
FIG. 5 is a schematic representation of a TFB (FIG. 5B) in accordance with one more embodiment of our invention. FIG. 5C shows the cross-sectional shape of the TFB at different axial positions, and FIG. 5A shows how the MFD and V-parameter vary axially along the TFB;
FIG. 6 is a set of refractive index profiles (6a, 6b, 6c) and light intensity profiles (6A, 6B, 6C) used to describe the well known core V- parameter;
FIG. 7 shows a family of graphs of MFD versus core V-parameter for different NAs, in accordance with a prior art approach to mode matching. These graphs were computed using the industry standard "Petermann II" definition;
FIG. 8 shows a family of graphs of MFD versus core V-parameter for different NAs, in accordance with still another embodiment of our invention. These graphs were also computed using the industry standard "Petermann II" definition;
FIG. 9 show a schematic refractive index profile of a mode-field resizer having a core-pedestal profile in accordance with still another embodiment of our invention; and
FIG. 10 is a schematic refractive index profile showing how a raised index ring is incorporated into the pedestal concept of FIG. 9, in accordance with another embodiment of our invention.

## DETAILED DESCRIPTION OF THE INVENTION

### Mode-Field Resizer- General

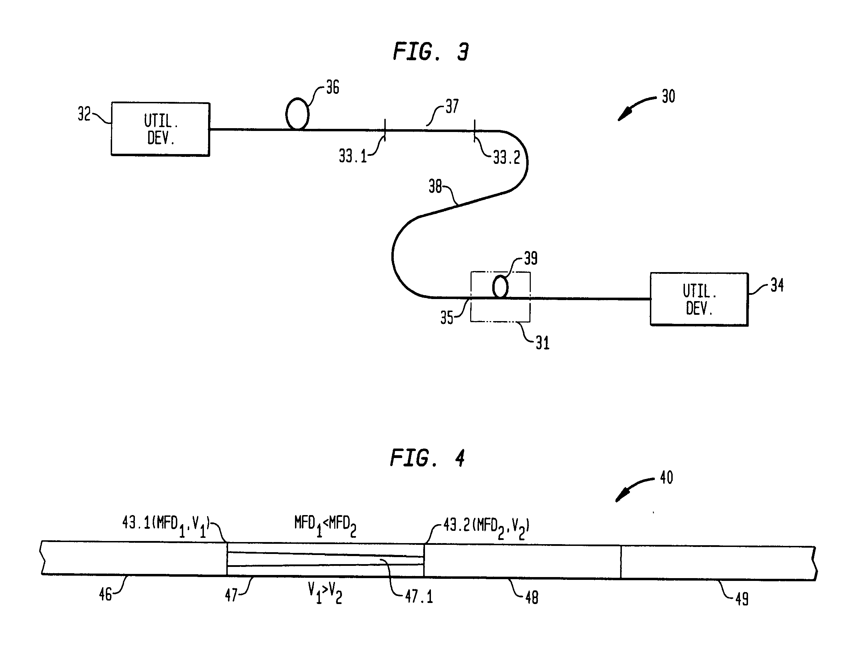

Before discussing our invention in detail, we first turn to FIG. 3, which shows an apparatus, subsystem or system 30 comprising a first utilization device 32 and a second utilization device 34 coupled to one another by an optical fiber link.

The utilization devices 32, 34 may include a wide variety of optical and/or optoelectronic devices such as an optical/light source, an optical/light receptor, or both. A typical optical source is a laser or laser-amplifier combination. A typical laser is a fiber laser or a semiconductor laser. Of course, other types of lasers or laser-amplifier combinations may also be suitable. On the other hand, a typical optical receptor is a segment of optical fiber, an optical amplifier, an optical multiplexer, an optical circulator, an optical grating, a bulk optical element, an optical isolator, a photodetector, an optical receiver, etc. Illustratively, when one of the utilization devices includes an optical source, the other includes at least an optical receptor.

The link illustratively includes in tandem: a first fiber (e.g., a standard SMF) 36 coupled to utilization device 32, an all-fiber mode-field resizer 37 designed in accordance with one aspect of our invention, a pigtail fiber 38, and a gain-producing fiber (GPF) 39 coupled to utilization device 34. Standard fusion splices (at interfaces 33.1, 33.2, 35) are typically used to couple the resizer 37, pigtail 38 and GPF 39 to one another.

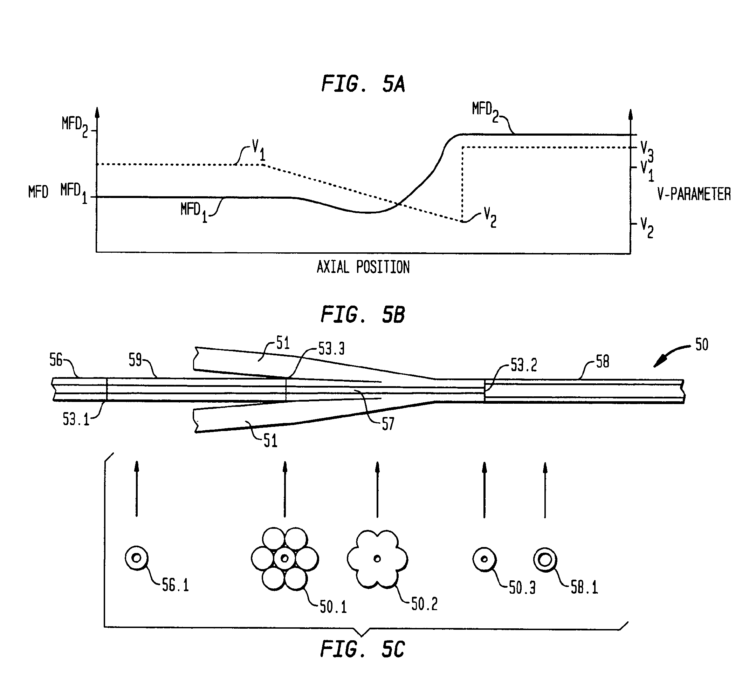

Typically GPF 39 is incorporated in a well-known optical amplifier 31. For simplicity amplifier 31 is shown schematically and in block diagram form. The details of pumping the GPF 39 have been omitted, but are well known in the art. For example, it is well known that the amplifier may employ a *co-propagating* pump scheme, in which the signal light and pump light propagate through GPF 39 in the same direction, or a *counter-propagating* scheme, in which the signal light and pump light propagate through GPF 39 in opposite directions. In either case, and in accordance with one aspect of our invention, a TFB of the type shown in FIG. 5 may be used to couple multiple pump light sources into GPF 39.

Since signal light may propagate in either direction through GPF 39, it likewise may propagate in either direction through the link, and in particular through mode-field resizer 37. Accordingly, the interfaces 33.1 and 33.2 at opposite ends of resizer 37 may serve as either input ports or output ports. Therefore, we refer to them hereinafter as simply *I/O ports*.

Usually first fiber 36 has a relatively small MFD/$A_{eff}$, whereas pigtail 38 has a relatively larger MFD/$A_{eff}$. Typically pigtail 38 is essentially identical in all respects to GPF 39 except that it contains no gain dopant; in particular the MFD/$A_{eff}$'s of the two are essentially the same. For example, both pigtail 38 and GPF 39 are illustratively DCFs. Although optical amplifier 31 is commonly provided with such a pigtail, in some applications the pigtail may be omitted, in which case the mode-field resizer 37 would couple fiber 36 directly to GPF 39. In either case, and in accordance with another aspect of our invention, an all-fiber mode-field resizer 37 is used to match the MFD/$A_{eff}$ of fiber 36 to the MFD/$A_{eff}$ of either pigtail 38 or to GPF 39 in the case where the pigtail is omitted.

A somewhat more detailed view of a mode-field resizer 47 is shown as part of an optical fiber link 40 is shown in FIG. 4. As in FIG. 3, mode-field resizer 47 illustratively couples first fiber 46 having a parameter set ($MFD_1$, $V_1$) at interface (I/O port) 43.1 to pigtail 48 and having parameter set ($MFD_2$, $V_2$) at interface (I/O port) 43.2, where the parameter V is described more fully below. (For simplicity, the core region 47.1 is shown only for the mode-field resizer 47, but it has been omitted for all other fibers in the link.) In accordance with this embodiment of our invention, the mode-field resizer is configured so that

$$MFD_1 < MFD_2 \qquad\qquad (1)$$

and

$$V_1 > V_2. \qquad\qquad (2)$$

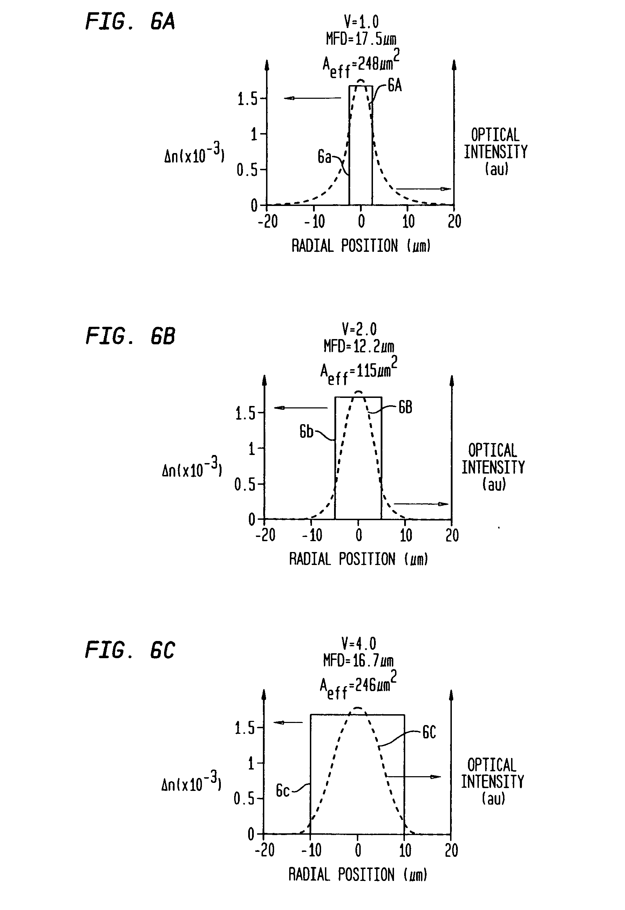

FIG. 6 shows three refractive index profiles (6a, 6b, 6c) and three corresponding optical intensity distributions (6A, 6B, 6C) of step index fibers (core NA = 0.07; core/cladding $\Delta n = 0.0017$) to demonstrate how MFD varies with core V-parameter at a signal wavelength of $\lambda = 1080$ nm. When the V-parameter (also known as the V-number) is small (V < 1.5; e.g., V = 1.0, FIG. 6A), and hence the core diameter is relatively small also, the fundamental mode field 6A penetrates deep into the cladding, and a smaller traction of light is carried within the core (MFD = 7.5 $\mu$m, $A_{eff}$= 248 $\mu$m$^2$). As a consequence, the fundamental mode shape (intensity) is less Gaussian, which means that low loss interconnects are more difficult to attain, and that the fiber is more susceptible to macrobend losses. In contrast, when the V-parameter is larger, and hence the core diameter is relatively larger [FIG. 6B (V = 2.0; MFD = 12.2 $\mu$m, $A_{eff}$ = 115 $\mu$m$^2$) and FIG. 6C (V = 4.0; MFD = 16.7 $\mu$m, $A_{eff}$ = 246 $\mu$m$^2$)], the fundamental mode is better confined, and the mode shape is closer to Gaussian.

As discussed in more detail in the next section, the core region 47.1 of mode-field resizer 47 is illustratively tapered so that inequalities (1) and (2) are satisfied at or near interfaces (I/O ports) 43.1 and 43.2.. In addition, at least the outer cladding region may be etched (or otherwise altered) to reduce the outside diameter of the mode-field resizer fiber, thereby enabling the ratio of the core diameter to the cladding diameter to be tuned; that is, the ratio of the diameters of the core and cladding regions vary longitudinally along the resizer.

A mode-field resizer of the type described above has general application to bridging fibers having different MFD/$A_{eff}$'s. In the next section, however, we focus on a particularly important application: a TFB for use in high power amplifers/lasers, but modified to include such a mode-field resizer in accordance with another embodiment of our invention.

## Mode-Field Resizer-TFB Application

In this embodiment of our invention we effect mode-field resizing in a TFB 50 (FIG. 5B) by appropriate design of a mode-field resizing segment 57 of the center signal-light-carrying fiber (e.g., SMF) 56. A bundle of pump-light-carrying multimode fibers 51 surrounds fiber 56 (or, in an alternative embodiment, surrounds at least a portion of fiber segment 59 and all of fiber segment 57). All of these fibers are axially tapered in segment 57 of fiber 56, but the most important aspect is that segment 57 is configured to satisfy the MFD (or equivalent $A_{eff}$) inequality (1) and V-parameter inequality (2) described previously.

This design, in which segment 57 is actually an integral part of signal fiber 56, eliminates extra splices or components, reduces signal loss and coupling to unwanted modes, and significantly simplifies the manufacturing process. The only apparent splices are located at I/O port 53.1 to fiber 56 and at I/O port 53.2 to pigtail 58. (However, if an extra splice can be tolerated, segment 57 may be spliced to an optional, discrete section of fiber (e.g., SMF) 59 at interface 53.3.)

During well-known fabrication of a TFB, a bundle of fibers 51, 56 is stretched and tapered in a predetermined and repeatable fashion. For fibers of equal diameter, the total cross-sectional area, $A_{in}$, of a bundle of fibers (FIG. 5C; cross-section 50.1) before tapering is given as

$$A_{in} = \frac{\pi D_{input}^2 N_{arms}}{4}, \qquad (3)$$

where $D_{input}$ is the diameter of each of the $N_{arms}$ of individual input fibers. The output area, $A_{out}$, after tapering is given by

$$A_{out} = \frac{\pi D_{Totalout}^2}{4}, \qquad (4)$$

where $D_{Totalout}$ is the diameter of the tapered, fused bundle (FIG. 5C; cross-section 50.3 at interface/splice 53.2). Note, because the signal light can propagate in either direction through the resizer 50 depending on the application, the designations *input* and *output* may be reversed without changing the essence of our teaching.

The diameter taper-down-ratio (TDR) of the core of the individual fibers is given by $\sqrt{A_{in}/A_{out}}$ or

$$TDR = \frac{D_{input} \sqrt{N_{arms}}}{D_{totalout}}. \qquad (5)$$

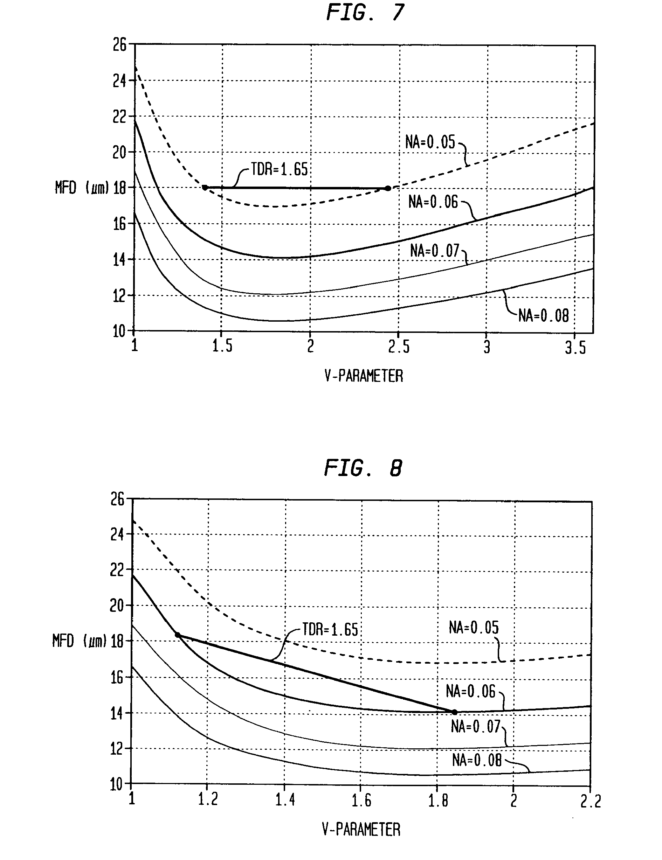

Since TDR is predetermined in the fabrication of the TFB, a unique feature of light propagation in guiding cores can be used: For step-index waveguides, as the core diameter is decreased from conventional values, the MFD decreases to a minimum value and then increases. (See, FIG. 4 of DiGiovanni '644, *supra*.) This relationship is shown graphically in FIG. 7 in terms of the V-parameter of the core,

$$V = \frac{\pi D_{core} \sqrt{(n_{core}^2 - n_{clad}^2)}}{\lambda} = \frac{\pi D_{core}}{\lambda} NA \qquad (6)$$

where $\lambda$ is the signal wavelength, $D_{core}$ is the core diameter, $n_{core}$ is the refractive index of the core, $n_{clad}$ is the refractive index of the cladding, and NA is the numerical aperture of the core.

The change in V-parameter due to the TDR is indicated by a horizontal line labeled TDR = 1.65 in FIG. 7 for the case where the TFB input MFD is essentially equal to that at the output for core NA = 0.05. This design strategy is discussed in DiGiovanni '644, *supra*.

In accordance with our invention, however, we have recognized that it is advantageous to resize the mode field so that MFD/$A_{eff}$ at the output after tapering is significantly larger than that at the input. This concept is illustrated in FIG. 8 for signal fiber 56 having the following approximate characteristics at $\lambda \sim 1080$ nm: NA = 0.06, V = 1.85, MFD = 14 $\mu$m, $A_{eff}$ = 130 $\mu$m$^2$, and $D_{core}$ = 10.6 $\mu$m. Tapering again by TDR = 1.65 results in the following approximate characteristics: V = 1.12, $D_{core}$ = 6.4 $\mu$m, MFD = 18 $\mu$m, and $A_{eff}$ = 230 $\mu$m$^2$. Although $D_{core}$ is reduced by a factor of 1.65, the MFD increases by a factor of about 1.3.

When the core is tapered such that the V-parameter approaches unity (V = 1), the mode field shape is known to become relatively non-Gaussian, which results in increased loss when interconnecting with a fiber having strictly Gaussian mode-field shape. Moreover, signal "lost" at the interconnection can be coupled into undesirable higher order core modes when the receiving fiber is an LMA fiber. These effects can be minimized through careful matching of the mode-field shapes. For example, although the MFD in the example above is around 18 $\mu$m using the industry standard Petermann II definition, the minimum splice loss to a strictly Gaussian mode-field shape is found for a 21 $\mu$m MFD Gaussian, and this splice loss is an acceptable 0.26 dB. Therefore, the TFB of FIG. 5 can be used to couple a 14 $\mu$m MFD single-mode input signal fiber to the 21 $\mu$m MFD Gaussian fundamental mode of an LMA fiber with acceptable signal loss.

It is understood that when the mode-field diameter shape departs from strictly Gaussian, then the MFD is generally not a useful way to describe the diameter or cross-sectional area of the guided mode. In this case, the industry relies instead upon the modal effective area, $A_{eff}$ given by:

$$A_{eff} = \frac{\left( \int |E|^2 \, dA \right)^2}{\int |E|^4 \, dA} \qquad (7)$$

where E is the transverse spatial envelope of the mode's electric field, and the integrations are understood to be performed over the cross-sectional area of the fiber. When the mode-field shape is close to an axisymmetric (i.e., symmetric about the longitudinal axis of rotation of the fiber) Gaussian function, the MFD is an appropriate metric for the diameter of the mode and may be expressed as:

$$MFD = 2 \sqrt{\frac{2 \int |E|^2 \, dA}{\int \left| \frac{dE}{dr} \right|^2 \, dA}} \qquad (8)$$

where r is the radial coordinate. When the mode-field shape is exactly equal to an axisymmetric Gaussian function, then $A_{eff} = \pi \times MFD^2/4$.

**Alternative Embodiments**

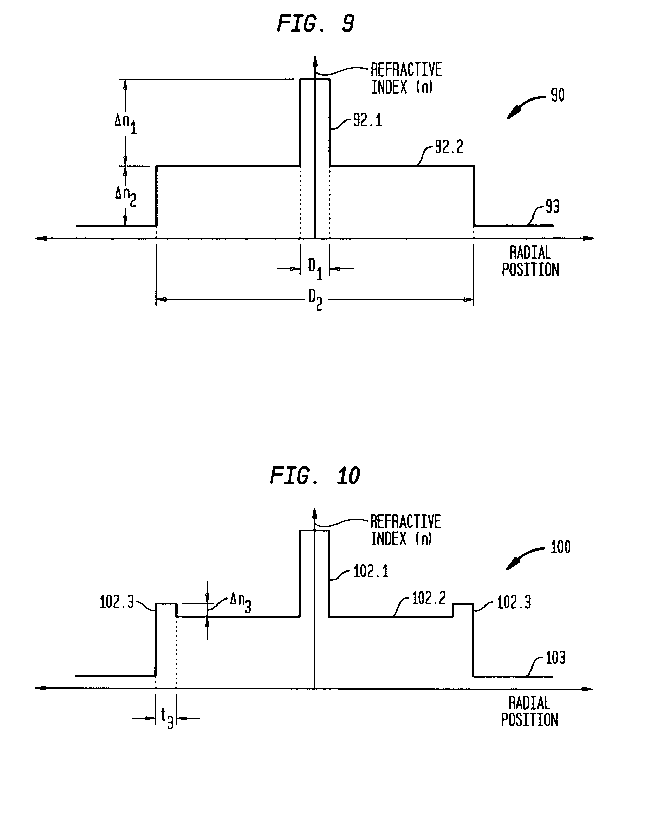

When the core is tapered such that the V-parameter approaches unity, and especially when V < 0.9, the core provides much weaker confinement to the mode field. As a result, the mode can exhibit elevated macrobend or microbend losses. These effects can be suppressed with proper packaging that ensures that the tapered fiber is kept straight and relatively stress-free inside the package. However, the mode-field diameter expansion using the strategy illustrated in FIG. 8 is somewhat limited [by (i) the non-Gaussian shape of the field for V < 0.9 and also (ii) the onset of bend losses or sensitivity to physical packaging that occurs when V < 0.9] before the above issues of mode-field distortion and robustness become problematic. Since these effects occur because the core cannot adequately confine the mode, a secondary waveguide can be added to effectively capture the mode. The secondary waveguide allows the mode field to be expanded even further. We embody this concept in *a pedestal* design of fiber 90, as shown in FIG. 9. (As a practical matter, this design is likely to be implemented by forming a depressed index, outer cladding around a higher index, inner cladding, thereby transforming the inner cladding into a pedestal.)

In the untapered section of fiber 90 (e.g., similar to section 59 of FIG. 5B, but not necessarily discrete) the core 92.1 of diameter $D_1$ is surrounded by a pedestal 92.2 of diameter $D_2$. The pedestal 92.2 has a refractive index between that of the core 92.1 and the cladding 93; that is, the refractive index of the pedestal is $\Delta n_1$ below that of the core and $\Delta n_2$ above that of the cladding. In the tapered section of the fiber (e.g., section 57 of FIG. 5B) the pedestal has final diameter $D_2$/TDR.

In the untapered section, the signal is guided in the fiber core 92.1. In the tapered section, which has a small core V-parameter, the signal escapes the core 92.1 and is captured and guided by the pedestal 92.2. By careful selection of the parameters $D_1$, $D_2$, $\Delta n_1$ and $\Delta n_2$, and knowing the TDR, a fiber can readily be designed so that the signal light in the TFB will be appropriately resized upon exiting the fiber. An illustrative design of such a fiber (before tapering) is described by Table I:

**TABLE I**

| Fiber Feature | Parameter |
|---|---|
| Core diameter | $D_1 = 5.6\ \mu m$ |
| Pedestal diameter | $D_2 = 56\ \mu m$ |
| Core index contrast | $\Delta n_1 = 0.0045$ |
| Pedestal index contrast | $\Delta n_2 = 0.0030$ |

An untapered section of the fiber of Table I will guide 1000 nm signal light in its single-mode core 92.1 with a MFD ~ 6.9 $\mu m$. However, a tapered section of the same fiber (TDR ~ 2.7) will guide a somewhat Gaussian fundamental mode shape with MFD ~ 12 $\mu m$. Furthermore, the expected coupling loss between this tapered fiber fundamental mode and a Gaussian mode with a 15 $\mu m$ MFD is less than 0.1 dB, which is acceptable in many applications. Therefore, a TFB 50 (FIG. 5), in which the mode-resizing segment 57 comprises a tapered fiber with this design, will convert a substantially Gaussian 6.9 $\mu m$ MFD single-mode input signal into an output signal that is compatible with a LMA 15 $\mu m$ diameter Gaussian mode.

In general this type of fiber can be considered to have a core-plus-pedestal design. The pedestal-to-cladding refractive index contrast $\Delta n_2$ is typically 0.00125 or greater (NA > 0.06). Furthermore, the pedestal diameter $D_2$ in the original untapered fiber is typically substantially (e.g., at least 3 times) larger than the MFD of the mode guided by the core. Illustratively, $D_2 > 18\ \mu m$. Moreover, $D_2$ is typically large enough that the effective area of the fundamental mode of the tapered fiber is more than 2.3 times larger than the effective area of the fundamental mode of the untapered fiber. For the wavelength range of 1000-1600 $\mu m$ this implies that $D_2$ is at least 40 $\mu m$.

The core diameter $D_1$ and the core-to-pedestal refractive index contrast $\Delta n_1$ are chosen such that the V-parameter of the core relative to the pedestal (at the input, e.g., at 53.3 of FIG. 5B) computed using these values lies between approximately 1.8 and 2.4, which ensures that the untapered core propagates a single-mode with substantially a Gaussian shape. The taper ratio is chosen to be at least 2.0 to ensure that the V-parameter of the core (at the output, e.g., at 53.2 of FIG. 5B) is substantially reduced by the tapering process; that is, the V-parameter of the tapered core will be less than about 1.3, preferably less than about 1.0. When the V-parameter of the tapered core is less than about 1.0, the mode will be only weakly guided by that core but will be more strongly guided by the pedestal. Although the mode will be guided by the tapered pedestal, the core will distort the mode-field shape by attracting light to the center. When the V-parameter of the tapered core is substantially less than 1.0 (i.e., 0.9 or less), the tapered core will have minimal impact on the shape of the fundamental mode of the tapered fiber.

In the core-plus-pedestal design, after tapering the mode is guided by the pedestal 92.2 with slight distortion induced by the core 92.1. Although the mode-field shape will deviate from a Gaussian (i.e., it will be non-Gaussian) because of the relatively large pedestal diameter, it will couple well to a fiber with similar core diameter, with or without the core feature. This design feature is significant because it offers the possibility of matching the mode shape of the TFB output to that of the pigtail 58 (FIG. 5B) or to the GPF itself (not shown in FIG. 5). As an example of one design for producing a non-Gaussian output, FIG 10 shows the index profile of a modified core-plus-pedestal fiber 100 in which a raised-index ring 102.3 at the edge of the pedestal 102.2 pulls optical energy away from the centerline. Thus, the ring 102.3 flattens the radial intensity profile, reduces the intensity at the centerline, and increases the effective mode area. Consequently, the mode-field shape of fiber 100 will mimic that of the GPF or its pigtail 58 (FIG. 5B). The slight perturbation of the central feature (core 102.1) is unlikely to alter the mode-field overlap significantly because the core is designed to have small V-parameter after tapering. In this embodiment of invention, the TFB performs two new functions as the diameter is tapered: (i) it expands the mode-field diameter, and (ii) it modifies the shape of the mode field to match a desired (e.g., non-Gaussian) output profile.

The size of the index contrasts of the core 102.1 $\Delta(\Delta n_1)$, the pedestal 102.2 $(\Delta n_2)$ and the ring 102.3 $(\Delta n_3)$, as well as the thickness $(t_3)$ of the ring depend on the parameters of the fiber being coupled to (e.g., fibers 38, 48, 58 of FIGs. 3, 4, 5, respectively). Thus, although $\Delta n_1$ of the core is illustrated in FIG. 10 as being larger than $\Delta n_2$ of the pedestal, in practice $\Delta n_2$ may be comparable in size to $\Delta n_1$ or even larger than $\Delta n_1$. On the other hand, $\Delta n_3$ of the ring is expected to relatively small relative to $\Delta n_1$ and $\Delta n_2$ because even a small $\Delta n_3$ can have a significant impact on the mode-field shape. Finally, the thickness $t_3$ of the ring 102.3 may be relatively thin or thick depending, again, on the fiber being coupled to.

It is to be understood that the above-described arrangements are merely illustrative of the many possible specific embodiments that can be devised to represent application of the principles of the invention. Numerous and varied other arrangements can be devised in accordance with these principles by those skilled in the art without departing from the spirit and scope of the invention.

In particular, for typical high power applications, the signal light is generated in the form of short duration, high energy pulses. The peak power of such pulses is illustratively greater than a few tens of kilowatts and often greater than a few hundred kilowatts.

Throughout this discussion references made to *wavelength* are intended to mean the center wavelength of a particular light emission, it being understood that all such emissions have a characteristic linewidth that includes a well-known range of wavelengths above and below the center wavelength. In addition references made to light propagation in a *single* transverse mode are intended to include propagation in essentially a single mode; that is, in a practical sense perfect suppression of all other modes may not always be possible. However, single mode does imply that the intensity of such other modes is either small or insignificant.

When we refer to a GPF, we mean an optical fiber doped with a gain-producing species such as Er, Yb or both. However, other gain-producing species may be used in lieu of Er and/or Yb, or in combination with them, to implement optical amplification/lasing schemes, including other rare-earth elements (e.g., Nd, Tm, Ho, etc) or chromium (Cr).

In addition, those skilled in the art will appreciate that at the fusion splices in an assembled device, such as those at locations 33.1 and 33.2 in FIG. 3, or at locations 43.1 and 43.2 in FIG. 4, well-known techniques for reducing fusion splice loss may be applied. For example, a relatively long duration heating step before, during, or after, fusion splicing is known to induce diffusion of the dopant species at the location of the fusion splice joint and can reduce the optical coupling loss. See A. D. Yablon, "Optical Fiber Fusion Splicing", Springer, New York (2005), which is incorporated herein by reference.

Moreover, an optical fiber can be locally heated to induce dopant diffusion that locally decreases the fiber's $M^2$. (When $M^2$ is very near to 1.0 the optical field of the fundamental transverse mode is very nearly Gaussian in shape because the transverse refractive index profile inside the core is essentially uniform.) Heating a fiber to sufficient temperatures (for example, near or above fusion splicing temperatures of about 2000°C) induces substantial diffusion of the index-altering dopants, thereby inducing significant changes in the fiber's transverse refractive index profile. Such dopant diffusion is employed to suppress center dips, ridges, or other refractive index profile features that increase the $M^2$ of the fundamental $LP_{01}$ mode. In some cases, the MFD of the fundamental transverse $LP_{01}$ mode actually *decreases* following heat-induced diffusion. See, the copending patent application Serial No. 11/633,999 of R. S. Windeler and A. D. Yablon filed on December 5, 2006. This approach may be utilized to improve coupling, for example, to a GPF 39, 49 (FIGs. 3, 4, respectively) or a GPF pigtail 38, 48, 58 (FIGs. 3, 4, 5, respectively.)

Finally, in actual optical fibers, the refractive index profile is not an idealized step but exhibits transverse non-uniformities due to the manufacturing process. Such transverse non-uniformities can include a center-dip, ripples, or rounding-off of the index profile. Alternatively, it is well known in the art that transverse non-uniformities can be deliberately introduced into the fiber's refractive index profile, for example as in a grading or peaking of the core index profile. When the actual refractive index profile is not characterized by discrete uniform step, the definition of V-parameter appearing in Eq. (6) is not directly applicable. In this case it is an accepted practice to employ an equivalent step-index (ESI) profile in order to quantify the V-parameter of the waveguide. Methods for determining the ESI for a non step-index fiber profile are described in several texts including: L. B. Jeunhomme, "Single-Mode Fiber Optics: Principles and Applications," 2nd Ed., Dekker, New York (1990) and J. A. Buck, "Fundamentals of Optical Fibers," 2nd Ed., Wiley-Interscience, New Jersey, (2004), both of which are incorporated herein by reference.

**Claims**

1. Optical fiber apparatus comprising:

   a first optical fiber configured to propagate signal light in a predetermined transverse mode along a longitudinal axis, said first fiber having a core and a cladding,
   said first fiber configured to have a first effective mode-field area and a first core V-parameter proximate a first input/output port and to have a second effective mode-field area and a second core V-parameter proximate a second input/output port, said second mode-field area being greater than said first mode-field area and said second V-parameter being less than said first V-parameter.

2. The apparatus of claim 1, wherein the axial cross section of said first fiber is tapered longitudinally.

3. The apparatus of claim 1, wherein said first fiber includes a longitudinal segment having a core region and a cladding region, wherein the ratio of the cross-sectional areas of said core and cladding regions vary longitudinally along said segment.

4. The apparatus of claim 1, further including a second optical fiber coupled to said second port, said second fiber including a gain-producing section.

5. The apparatus of claim 4, wherein said gain-producing section abuts said second port.

6. The apparatus of claim 4, wherein said second fiber includes a non-gain-producing section interposed between said second port and said gain-producing section.

7. The apparatus of claim 4, wherein the effective mode-field area of said second fiber is approximately equal to said second effective mode-field area of said first fiber.

8. The apparatus of claim 4, further including
   a multiplicity of bundled, tapered third fibers configured to propagate pump light, said multiplicity being bundled around said first fiber and configured to couple said pump light into said second fiber,
   said first fiber being configured to propagate signal light to be amplified by said gain-producing section.

9. The apparatus of claim 1, wherein said second V-parameter is less than approximately 1.3.

10. The apparatus of claim 9, wherein said second V-parameter is less than approximately 1.0.

11. The apparatus of claim 1, wherein said first V-parameter is greater than approximately 1.8.

12. The apparatus of claim 1, said first fiber comprises a pedestal region interposed between said core region and said cladding region, said pedestal region having a refractive index intermediate that of said core region and said cladding region.

13. The apparatus of claim 12, wherein said second V-parameter is a core-to-pedestal V-parameter and is less than approximately 0.9.

14. The apparatus of claim 12, wherein said first fiber is configured to produce a non-Gaussian mode field of said signal light at one of said input/output ports.

15. The apparatus of claim 14, further including a raised-index ring interposed between said pedestal region and said cladding region, the refractive index of said ring being greater than the refractive index of said pedestal region.

16. The apparatus of claim 1, wherein said apparatus comprises an optical amplifier.

17. The apparatus of claim 1, wherein said apparatus comprises a laser.

18. An all-fiber mode-field resizer comprising:

a first optical fiber configured to propagate light in a predetermined transverse mode along a longitudinal axis, said first fiber having a tapered core and a tapered cladding, said first fiber configured to have a first effective mode-field area and a first core V-parameter proximate a first input/output port and to have a second effective mode-field area and a second core V-parameter proximate a second input/output port, said second mode-field area being greater than said first mode-field area and said second V-parameter being less than said first V-parameter, said second V-parameter being less than approximately 1.3, said first V-parameter being greater than approximately 1.8, and a second optical fiber coupled to said second port, said second fiber including a gain-producing section.

19. The resizer of claim 18, wherein said second V-parameter is less than approximately 1.0.

20. A fiber coupler comprising:

a multiplicity of bundled, multimode, tapered pump fibers configured to propagate pump light, said multiplicity being bundled around a signal fiber and configured to couple said pump light into an output fiber that includes gain-producing section, said signal fiber having a segment configured to propagate signal light to be amplified by said gain-producing section, said signal fiber segment being configured to have a first effective mode-field area and a first core V-parameter proximate a first input/output port and to have a second effective mode-field area and a second core V-parameter proximate a second input/output port, said second mode-field area being greater than said first mode-field area and said second V-parameter being less than said first V-parameter, said first port being coupled to said signal fiber and said second port being coupled to said output fiber.

21. The coupler of claim 20, wherein said second V-parameter is less than approximately 1.3.

22. The coupler of claim 21, wherein said second V-parameter is less than approximately 1.0.

23. The coupler of claim 20, wherein said first V-parameter is greater than approximately 1.8.

# FIG. 1
(PRIOR ART)

REFRACTIVE INDEX (n)

RADIAL POSITION

# FIG. 2A
(PRIOR ART)

# FIG. 2B
(PRIOR ART)

FIG. 3

FIG. 4

EP 1 988 412 A2

## FIG. 5A

## FIG. 5B

## FIG. 5C

FIG. 6A

V=1.0
MFD=17.5μm
$A_{eff}=248μm^2$

Δn(x10$^{-3}$)

OPTICAL INTENSITY (au)

RADIAL POSITION (μm)

FIG. 6B

V=2.0
MFD=12.2μm
$A_{eff}=115μm^2$

Δn(x10$^{-3}$)

OPTICAL INTENSITY (au)

RADIAL POSITION (μm)

FIG. 6C

V=4.0
MFD=16.7μm
$A_{eff}=246μm^2$

Δn(x10$^{-3}$)

OPTICAL INTENSITY (au)

RADIAL POSITION (μm)

## FIG. 7

## FIG. 8

FIG. 9

REFRACTIVE
INDEX (n)

$\Delta n_1$

$\Delta n_2$

92.1

92.2

93

90

$D_1$

$D_2$

RADIAL
POSITION

FIG. 10

REFRACTIVE
INDEX (n)

102.1

102.3

$\Delta n_3$

102.2

102.3

103

100

$t_3$

RADIAL
POSITION

EP 1 988 412 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5864644 A, D. J. DiGiovanni
- US 1999 A
- US 6970624 B, D. J. DiGiovanni
- US 2005 A
- US 11633999 B, R. S. Windeler and A. D. Yablon

**Non-patent literature cited in the description**

- **L. B. JEUNHOMME.** Single-Mode Fiber Optics: Principles and Applications. Dekker, 1990
- **J. A. BUCK.** Fundamentals of Optical Fibers. Wiley-Interscience, 2004